# EUROPEAN PATENT APPLICATION

(11) **EP 4 576 701 A1**
(43) Date of publication of application: **25.06.2025**
(21) Application number: 24216457.2
(22) Date of filing: 29.11.2024
(51) Int. Cl.: H04L 41/0869, H04L 41/082, H04L 41/0668

(54) **COMMUNICATION METHOD AND APPARATUS**

(30) Priority: 20.12.2023 CN 202311761147
(71) Applicant: New H3C Technologies Co., Ltd., Hangzhou, Zhejiang 310052 (CN)
(72) Inventor: LI, Hao, Beijing, 100102 (CN); YIN, Jianzhong, Beijing, 100102 (CN)
(74) Representative: IPAZ

(57) **Abstract**

The present disclosure provides a communication method and apparatus applied to a first network device, the method includes: forming no stacking system between the first network device and the second network device in response to determining that a first software version of the first network device after the software version upgrade is different from a second software version of the second network device and the first network device is in an ISSU period; obtaining an ISSU role of the first network device; establishing an ISSU backup channel with the second network device in response to determining that the ISSU role is a slave node; receiving configuration files and first backup data sent by the second network device through the ISSU backup channel; restoring a local configuration and first traffic data according to the configuration file and the first backup data; wherein, the first network device after the software version upgrade and the second network device are respectively in different distributed systems, and are master devices in their respective distributed systems.

## Description

### Technical Field

The present disclosure relates to the technical field of communication, in particular to a communication method and apparatus.

### Background

At present, a stacking technology is to manage and control multiple network devices as a whole to improve the reliability and flexibility of network devices. In a stacking technology, multiple network devices are allowed to behave as a single logical device in regard of the actual physical connection. The above stacking technology usually consist of two or more network devices, one of which is a master device and the other of which are slave devices. A distributed system is constructed between the master and slave devices. The distributed system is similar to a modular device, and data is synchronized among individual network devices according to a distributed model, so as to realize the cooperative work, unified management and uninterrupted maintenance of multiple network devices.

In-Service Software Upgrade (abbreviated as: ISSU) refers to upgrading software of a network device without interrupting a currently running network traffic service. ISSU can improve the reliability and flexibility of an upgrade process, and avoid an impact of traffic interruption on the network. In a dual-machine stacking system, ISSU is centered on a slave device to proceed. The specific upgrade process is as follows: a slave device upgrades its own software version firstly, then restarts using a new version; after the restart, data between a master device and the slave device is synchronized between the master device and the slave device through a highly available cluster (abbreviated as: HA) channel, and a data compatibility between the master device and the slave device is ensured (the data compatibility means that a structure of the data changes and the change in the structure does not affect the processing of the data, the old version ignores the newly defined data included in a received message, and the new version uses a default value for an unassigned field included in the received message), then, the original master device upgrades its own software version, and restarts using the new version, and the original slave device is upgraded to a new master device; finally, the original master device, after restarting, plays a role of a new slave device and forms a stacking with the new master device.

According to the above, after the version of the slave device is upgraded, the master and slave devices are in a state of running across versions. Data needs to be backed up between master and slave devices to ensure that the slave device can carry traffic flow. However, the data structure and processing time sequence may be different between different versions due to an introduction of new characteristics, problem modification, etc. Therefore, ISSU also suffers from the following issues: high requirements for programming, special consideration for data and processing compatibility, and lack of verification means. In addition, versions of the same branch is often required to be compatible with each other for a fairly long period of time (e.g., 18 months). As a result, it is required to maintain cross-matching and cross-compatibility between versions and to guarantee full characteristics, which leads to a very heavy test workload (e.g., testing a version per month, where a full-characteristics compatibility test needs to be performed for a new version against all 17 previous versions), and once a version is released and actually applied to the current network, even if the incompatibility has already been established in fact, it cannot be saved.

In order to solve the issues arising in ISSU, the existing solution is to use a distributed architecture, that is, the master and slave devices are still regularly stacked during the cross-version operation. Data is backed up between master and slave devices through regular distributed channels (e.g., HA channel, unicast and multicast channels between devices, etc.), and backup modes include real-time backup and batch backup. Backup data includes configuration, protocol status, forwarding entries, statistics, events, etc. In order to ensure cross-version compatibility, the modification of a synchronization message can be standardized, uniformly defined, serialized and de-serialized.

However, the standardization, unified definition, serialization and deserialization performed in the existing solution can solve the incompatibility issue of data structure, but cannot effectively solve the incompatibility issue of processing time sequence and the issue of heavy test workload.

### Summary

In view of this, the present disclosure provides a communication method and apparatus to solve the issue of incompatibility of processing time sequence and heavy test workload in the existing ISSU upgrade process.

In a first aspect, the present disclosure provides a communication method applied to a first network device, wherein the first network device is in a stacking system and is a slave device in the stacking system, the stacking system further includes a second network device that is a master device in the stacking system, a distributed system is formed between the first network device and the second network device, the first network device performs a software version upgrade and restarts, the method including:
forming no stacking system between the first network device and the second network device in response to determining that a first software version of the first network device after the software version upgrade is different from a second software version of the second network device and the first network device is in an ISSU period;
obtaining an ISSU role of the first network device;
establishing an ISSU backup channel with the second network device in response to determining that the ISSU role is a slave node;
receiving configuration files and first backup data sent by the second network device through the ISSU backup channel;
restoring a local configuration and first traffic data according to the configuration files and the first backup data;
wherein, the first network device after the software version upgrade and the second network device are respectively in different distributed systems, and are master devices in their respective distributed systems.

In a second aspect, the present disclosure provides a communication apparatus applied to a first network device, wherein the first network device is in a stacking system and is a slave device in the stacking system, the stacking system further includes a second network device that is a master device in the stacking system, a distributed system is formed between the first network device and the second network device, the first network device performs a software version upgrade and restarts, the apparatus including:
a forming unit, to form no stacking system between the first network device and the second network device in response to determining that a first software version of the first network device after the software version upgrade is different from a second software version of the second network device and the first network device is in an ISSU period,;
an obtaining unit, to obtain an ISSU role of the first network device;
an establishing unit, to establish an ISSU backup channel with the second network device in response to determining that the ISSU role is a slave node;
a receiving unit, to receive configuration files and first backup data sent by the second network device through the ISSU backup channel;
a restoring unit, to restore a local configuration and first traffic data according to the configuration files and the first backup data;
wherein, the first network device after the software version upgrade and the second network device are respectively in different distributed systems, and are master devices in their respective distributed systems.

In a third aspect, the present disclosure provides a network device, including a processor and a machine readable storage medium having a machine executable instruction that can be executed by the processor stored therein, wherein the machine executable instruction causes the processor to execute the method provided in the first aspect of the present disclosure.

Therefore, by applying the communication method and apparatus provided in the present disclosure, no stacking system is formed between the first network device and the second network device in response to determining that a first software version of the first network device after the software version upgrade is different from a second software version of the second network device and the first network device is in an ISSU period; the first network device obtains an ISSU role of the first network device; an ISSU backup channel is established with the second network device in response to determining that the ISSU role is a slave node; the first network device receives configuration files and first backup data sent by the second network device through the ISSU backup channel; the first network device restores a local configuration and first traffic data according to the configuration files and the first backup data; wherein, the first network device after the software version upgrade and the second network device are respectively in different distributed systems, and are master devices in their respective distributed systems.

In this way, the first network device and the second network device operate in a dual-machine mode during the cross-version operation. Each network device is the master device in a distributed system of the network device itself. After the first network device restarts, the first network device restores configurations of all modules and restores the forwarded traffic data of traffic modules, without considering the configuring time sequence between traffic modules. The structure of the backup data can be solidified, so that in the software version upgrade interval, the data structure of backup data synchronized between different versions is no longer changed, which reduces the test workload, and solves the issue of incompatibility of processing time sequence and heavy test workload in the existing ISSU upgrade process.

### Brief Description of the Drawings

Fig. 1 is a diagram of a communication method provided in an example of the present disclosure;
Fig. 2 is a networking diagram of network device cross-version operation provided in an example of the present disclosure;
Fig. 3 is a structural diagram of a communication apparatus provided in an example of the present disclosure;
Fig. 4 is a hardware structural diagram of a network device provided in an example of the present disclosure.

### Detailed Description

Exemplary examples will be described in detail here, and are exemplarily shown in the accompanying drawings. When the following description refers to accompanying drawings, the same number in different accompanying drawings indicates the same or similar elements unless otherwise indicated. The examples described in the following exemplary examples do not represent all examples consistent with the present disclosure. Instead, they are only examples of the apparatus and method that are consistent with some aspects of the present disclosure as detailed in the appended claims.

The terms used in the present disclosure are only for the purpose of describing a particular example and are not intended to restrict the present disclosure. The singular forms "a", "said" and "the" used in the present disclosure and the appended claims are also intended to include the plural form, unless the context clearly indicates otherwise. It should also be understood that the term "and/or" as used herein means and encompasses any or all possible combinations of one or more corresponding listed items.

It should be understood that although the terms first, second, third, etc. may be used to describe various information in the present disclosure, the information should not be limited to these terms. These terms are used only to distinguish information of the same type from each other. For example, without departing from the scope of the present disclosure, the first information may also be referred to as the second information, and similarly the second information may be referred to as the first information. Depending on the context, the word "if' used here can be interpreted as "while", "when" or "in response to determining".

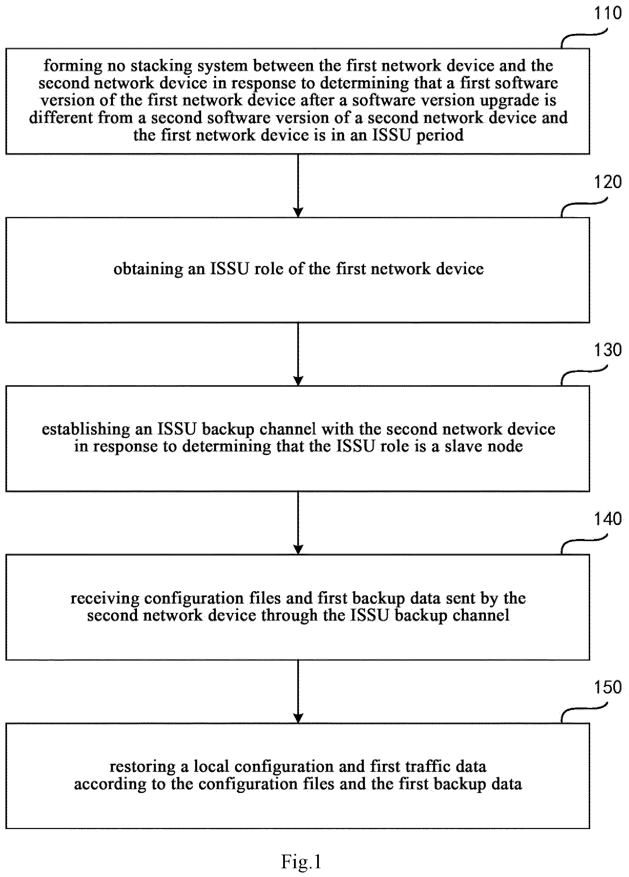

The communication method provided in the example of the present disclosure is described in detail below. Referring to Fig. 1, Fig. 1 is a diagram of a communication method provided in an example of the present disclosure. The method is applied to a first network device, and the communication method provided by the example of the present disclosure may include the following blocks.

Block 110: forming no stacking system between the first network device and the second network device in response to determining that a first software version of the first network device after a software version upgrade is different from a second software version of a second network device and the first network device is in an ISSU period;

Specifically, the first network device is in a stacking system, and the stacking system further includes the second network device. The second network device is a master device in the stacking system, and the first network device is a slave device in the stacking system. A distributed system is formed between the first network device and the second network device. The distributed system is similar to a modular device, and data is synchronized among individual network devices according to a distributed model, so as to realize the cooperative work, unified management and uninterrupted maintenance of multiple network devices.

The first network device performs a software version upgrade, i.e., ISSU, according to an upgrade instruction input by a manager. After the software version upgrade, the first network device restarts.

After the first network device restarts, the first network device establishes a communication connection with the second network device and interactively negotiates with the second network device for a device attribute. In the process of interactive negotiation, the first network device obtains the second software version of the second network device, an ISSU role of the second network device and other information.

The first network device obtains its own first software version and identifies whether the first software version is the same as the second software version. The first network device identifies whether it is currently in the ISSU period (that is, each network device in the stacking system upgrades its own software version in order, where the slave device updates firstly, and then the master device updates, and a software upgrade period of the network device is called the ISSU period) in response to determining that the first software version is different from the second software version. The first network device no longer constructs an existing stacking system with the second network device in response to determining that the first network device is in the ISSU period.

The above communication connection is specifically a physical communication channel, that is, a physical connection inserted between the first network device and the second network device.

### Block 120: obtaining an ISSU role of the first network device;

Specifically, according to the description in the Block 110, the first network device obtains its own ISSU role.

The ISSU role includes a master node and a slave node. This ISSU role is specified and configured by the manager when the first network device and the second network device form the stacking system.

Block 130: establishing an ISSU backup channel with the second network device in response to determining that the ISSU role is a slave node;

Specifically, after the first network device obtains its own ISSU role according to the description in the Block120, the first network device identifies the ISSU role. The first network device establishes an ISSU backup channel with the second network device in response to determining that the ISSU role is a slave node. The ISSU backup channel is a logical channel established on the physical communication channel.

In the example of the present disclosure, the first network device exits the stacking system constructed previously by the first network device and the second network device once the first network device has restarted. The first network device automatically acts as a master device in another distributed system that is different from the distributed system in which the second network device is located.

After the first network device establishes the ISSU backup channel with the second network device, the second network device obtains all the stored configuration files and first backup data to be backed up of traffic modules of the second network device itself. The second network device sends the configuration files as well as the first backup data to the first network device through the ISSU backup channel.

It should be noted that, in the process of the second network device interactively re-negotiating with the first network device, the second network device determines that the first network device has upgraded the software version, which is different from a local software version. In this case, the second network device can firstly obtain a local configuration file and send an event notification to each local traffic module to inform the traffic module that the first network device has upgraded the software version, and each traffic module collects its own backup data (also known as partial backup data). After all of the traffic modules have finished the collection, the second network device integrates individual pieces of partial backup data into the first backup data (also known as whole backup data).

The above backup data collected by each traffic module is specifically the necessary backup data to maintain a traffic function by itself, such as a forwarding table, a routing table and so on included in a protocol module; and user authentication data and so on included in an authentication module.

Block 140: receiving configuration files and first backup data sent by the second network device through the ISSU backup channel;

Specifically, after the first network device establishes the ISSU backup channel with the second network device according to the description in the Block 130, the first network device receives the configuration files and the first backup data sent by the second network device.

In the example of the present disclosure, the configuration files and the first backup data can be sent to the first network device at the same time; alternatively, the configuration file and the first backup data can be sent to the first network device in multiple times.

Block 150: restoring a local configuration and first traffic data according to the configuration files and the first backup data;

Specifically, after the first network device receives the configuration files and the first backup data according to the description in the Block 140, the first network device restores the local configuration firstly according to the configuration files. The local configuration includes a global configuration (an underlying software and hardware resource allocation, an interface configuration, a communication protocol, etc.) and a traffic configuration (an attribute of a traffic module, a traffic function, etc.). Then, the first traffic data in the traffic modules is restored according to the first backup data.

It should be noted, the traffic modules being various protocol modules is taken as an example for description, such as routing, STP, and so on. For a protocol module, although the first network device and the second network device adopt a dual-machine mode, the current configuration of the first network device is the same as the current configuration of the second network device (for example, a loopback interface address, rooter-id of route, etc.), therefore, in order to avoid protocol confusion caused by the subsequent simultaneous operation, the first network device and the second network device can behave as one protocol entity externally, and various protocols need to be processed centrally in one network device. Generally, the protocol module runs in the ISSU master node, and after the ISSU slave node receives a protocol packet, the ISSU slave node passes through the protocol packet to the ISSU master node, to be processed by the ISSU master node.

It should be understand that the first network device puts a protocol state machine, an aging timer, a forwarding table, and a routing table included in a protocol module of the first network device in a suspended state according to the ISSU slave node identity. Since the above functions are all in a suspended state, the first network device only enables a transceiver function of an interface, and after the first network device receives a data packet, the first network device also passes through the data packet to the second network device to be processed by the second network device.

Optionally, in the example of the present disclosure, the method further includes a process of the second network device registering its own interface with the first network device.

Specifically, the first network device sends an interface registration message to the second network device through the ISSU backup channel in response to determining that the local configuration and the first traffic data are restored, where the interface registration message includes an interface attributes of each interface included in the first network device; the first network device sets each interface included in the first network device to an enabled (UP) state, to cause each interface to receive or send a packet.

According to the above, in order to pass through all types of packets (protocol packet and data packet) received by the slave node to the ISSU master node, the ISSU master node should be able to know an interface of the ISSU slave node, so that each traffic module in the ISSU master node can normally process the passed-through packets. Therefore, it is necessary to register the interface included in the first network device as an optical board interface with the second network device, that is, for the second network device, the interface included in the first network device is extension of an interface included in the second network device.

The above optical board interface can be considered as a special extension interface, and no software system is configured in the optical board. The second network device can consider each physical interface included in the first network device as an interface of the second network device itself.

Optionally, in the example of the present disclosure, the method further includes a process of pass through of a packet from a first network device to a second network device to be centrally processed by the second network device.

In particular, the first network device includes a first interface, and the first interface has been registered with the second network device according to the preceding procedure.

The first network device firstly determines its ISSU identity in response to determining that the first network device receives a first packet sent by a third network device through the first interface. The first network device sends the first packet to the second network device through the ISSU backup channel in response to determining that the ISSU identity is an ISSU slave node, to cause the second network device to process the first packet accordingly; the first network device receives a second packet obtained after the second network device processes the first packet accordingly, through the ISSU backup channel; the first network device sends the second packet to the third network device through the first interface.

The above first packet and the second packet can be specifically a protocol packet or a data packet.

After the interface of the first network device is UP, the traffic flow can be jointly carried and served by the first network device and the second network device, and be centrally processed by the second network device.

Optionally, in the example of the present disclosure, the method further includes a process of sending backup data to the first network device again before the second network device performs a software version upgrade and restarts.

Specifically, before the second network device performs a software version upgrade and restarts, the second network device obtains second backup data of its own traffic modules to be backed up. The second network device sends the second backup data to the first network device through the ISSU backup channel.

After the first network device receives the second backup data, the first network device stores the second backup data in a corresponding traffic module.

It should be understand that, in order to ensure as much as possible that the backup data stored within the first network device is up-to-date data during ISSU, the second network device sends the second backup data to the first network device again before restarting.

Optionally, in the example of the present disclosure, the method further includes a process of the first network device negotiates with the second network device after the software version upgrade again to form a stacking system.

Specifically, once the second network device after the software version upgrade restarts, the first network device establishes a communication connection with the second network device after the software version upgrade again, and interactively negotiates with the second network device after the software version upgrade for a device attribute. In the interactive negotiation process, the first network device and the second network device after the software version upgrade form a stacking system again. At this time, the second network device after the software version upgrade is a slave device in the stacking system, and the first network device is a master device in the stacking system. A distributed system is formed again between the master device and the slave device, and a distributed channel (e.g., HA channel, inter-board channel (IBC), unicast and multicast channels, etc.) is established between the first network device and the second network device after the software version upgrade.

The third backup data is sent to the second network device through the distributed channel, to cause the second network device to store the third backup data locally.

The first network device after the software version upgrade and the second network device after the software version upgrade are in the same distributed system, and the first network device after the software version upgrade is a master device in the distributed system, and the second network device after the software version upgrade is a slave device in the distributed system.

It should be understand that the traffic flow is carried and processed by the first network device during restart of the second network device. The above process of forming a stacking system again, electing a master role and a slave role within the stacking system, and the master device and the slave device forming a distributed system are the same as the existing process and will not be repeated here.

Optionally, in the example of the present disclosure, backup data sent for each software version after software version upgrade has a same data structure in response to determining that a software version of the first network device and a software version of the second network device are in the same software version upgrade interval.

Backup data sent for each software version after software version upgrade has a different data structure in response to determining that the software version of the first network device and the software version of the second network device are in different software version upgrade intervals.

The above process specifically refers to a structure solidified process of backup data. The software version upgrade interval specifically refers to a version cycle. For example, every 10 versions constitute a version cycle. Within the cycle of 10 versions, when the network devices are in any two versions, data structures of all backup data sent between the network devices during the ISSU period are the same. Because the data structures are the same, there is no need to cross-test all versions.

In one example, the software version upgrade interval is [1,10], that is, Version 1 to Version 10 is a software version upgrade interval. The software version of the first network device is Version 5, and the software version of the second network device is Version 10. At this time, data structures of all backup data sent between the network devices are the same.

In another example, the software version upgrade interval 1 is [1,10], and the software version upgrade interval 2 is [11,20]. Data structures of all backup data sent between the network devices are different in response to determining that the software version of the first network device is Version 11, and the software version of the second network device is Version 5. At this time, a manager needs to select any version from the previous software version upgrade interval [1,10] (Version 1 to Version 10 are available for selecting), to conduct a compatibility test with Version 11 within the current software version upgrade interval [11,20]. Therefore, there is no need to cross-test all versions, thus reducing the test workload.

The test mentioned above is specifically a compatibility test process led by a manager. That is, at the beginning of the software version upgrade of each network device, the manager knows that a current software version of each network device is to be upgraded and knows a next software version to which the current software version will be upgraded to. Therefore, the manager initiates a compatibility test in response to determine that the manager determines that the upgraded software version of the first network device and the current software version of the second network device are in different software version upgrade intervals.

It should be noted that, after receiving backup data with different data structures, each network device can temporarily store the backup data in a local traffic module, and try to read, study and run the backup data with different data structures, determine the issue and a location where an error occurs, so as to improve the new software version in the future.

Therefore, by applying the communication method provided in the present disclosure, no stacking system is formed between the first network device and the second network device in response to determining that a first software version of the first network device after the software version upgrade is different from a second software version of the second network device and the first network device is in an ISSU period; the first network device obtains an ISSU role of the first network device; an ISSU backup channel is established with the second network device in response to determining that the ISSU role is a slave node; the first network device receives configuration files and first backup data sent by the second network device through the ISSU backup channel; the first network device restores a local configuration and first traffic data according to the configuration files and the first backup data; wherein, the first network device after the software version upgrade and the second network device are respectively in different distributed systems, and are master devices in their respective distributed systems.

In this way, the first network device and the second network device operate in a dual-machine mode during the cross-version operation. Each network device is the master device in a distributed system of the network device itself. After the first network device restarts, the first network device restores configurations of all modules and restores the forwarded traffic data of traffic modules, without considering the configuring time sequence between the traffic modules. The structure of the backup data can be solidified, so that in the software version upgrade interval, the data structure of backup data synchronized between different versions is no longer changed, which reduces the test workload, and solves the issue of incompatibility of processing time sequence and heavy test workload in the existing ISSU upgrade process.

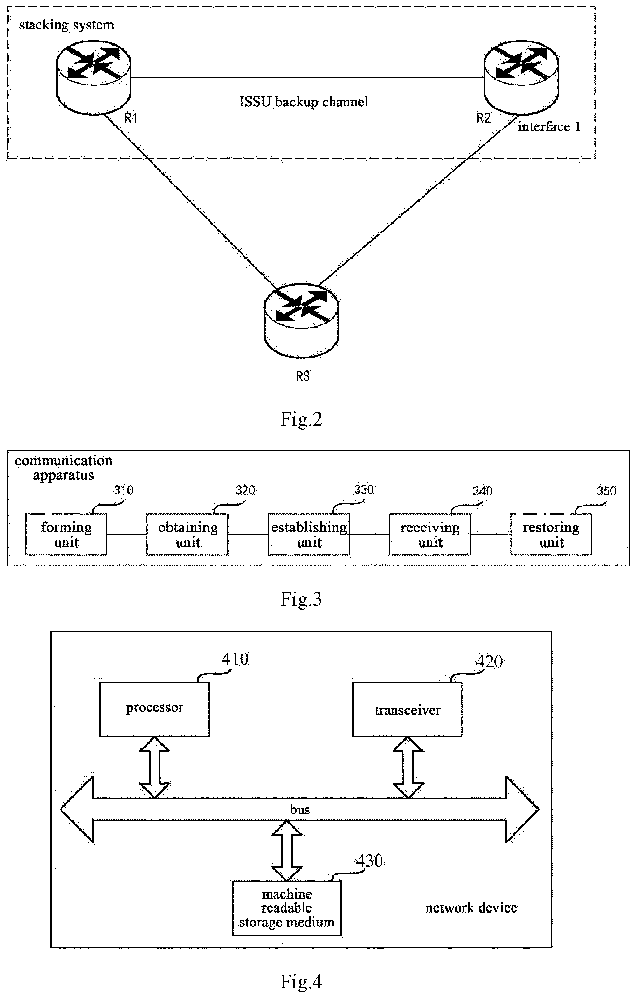

The communication method provided in the example of the present disclosure is described in detail below. Referring to Fig. 2, Fig. 2 is a networking diagram of network device cross-version operation provided in an example of the present disclosure. In Fig. 2, R1, R2, and R3 are included. R1 and R2 form a dual-machine stacking system, R1 is a master device in the dual-machine stacking system, and R2 is a slave device in the dual-machine stacking system. A distributed system is formed between the master device and the slave device. R3 establishes communication connections with R1 and R2, respectively.

Each of R1 and R2 includes a stacking module, an ISSU module, a pass through module, an interface management module and traffic modules. The stacking module is used to construct a stacking system between network devices with the same software version, and construct a physical communication channel (physical connection between network devices, e.g., a stacking line, etc.) for network devices with different software versions. The ISSU module is used to manage an ISSU role of a network device, control an ISSU process, issue an ISSU event, construct an ISSU backup channel, and control related processing during ISSU according to the ISSU role. The pass through module is used to responsible for the pass through of packets between network devices with different software versions. The interface management module is used to responsible for performing special processing on an interface of the interface management module itself. The traffic module is used to implement a traffic function.

In a dual-machine stacking system, ISSU is centered on a slave device to proceed. In the following, R2 is taken as an example for description.

R2 receives an upgrade instruction input by a manager and transmits the upgrade instruction to an ISSU module 2. The ISSU module 2 starts ISSU and triggers R2 to restart. After R2 restarts with a new software version, a stacking module 2, the ISSU module 2, and an underlying support module 2 used to construct a physical topology are started firstly. The stacking module 2 detects whether the physical communication channel is reachable and establishes a communication connection with R1 through the physical communication channel.

The stacking module 2 interactively negotiates with a stacking module 1 included in R1. During the interactive negotiation, the stacking module 2 obtains information such as a software version 1 (for example, V10) of R1, an ISSU role of R1, etc.

The stacking module 1 obtains its own software version 2 (for example, V11) and identifies whether the software version 1 is the same as the software version 2. The stacking module 2 identifies whether R2 is currently in the ISSU period in response to determining that the software version 1 is different from the software version 2. The stacking module 2 no longer constructs an existing dual-machine stacking system with the stacking module 1 in response to determining that R2 is currently in the ISSU period.

The stacking module 2 sends a notification message to the ISSU module 2 to inform the ISSU module 2 that R2 does not construct a dual-machine stacking system with R1. The ISSU module 2 determines that R2 does not construct the dual machine stacking system with R1, and the ISSU module 2 obtains its own ISSU role.

After the stacking module 2 obtains its own ISSU role, the stacking module 2 identifies the ISSU role. The stacking module 2 establishes the ISSU backup channel with an ISSU module 1 included in R1 through the physical communication channel in response to determining that the ISSU role is a slave node.

At this time, from a perspective of distributed, conventional distributed message processing all occurs among network devices with the same software version. Because the software version of R1 and the software version of R2 are different, R1 and R2 do not identify each other, that is, R1 and R2 are master devices of their respective distributed systems. Therefore, no conventional distributed channel is built between R1 and R2, and no operations such as batch backup and real-time backup are triggered by R1 due to the restart of R2.

After the ISSU module 1 establishes the ISSU backup channel with the ISSU module 2, the ISSU module 1 can select a backup mode based on the ISSU backup channel, such as distributed database backup mode, real-time backup, batch backup and so on.

The ISSU module 1 obtains all the stored configuration files. The configuration files are text files and are all in a command-line format. The ISSU module 1 further sends an event notification to each traffic module included in R1 to inform the traffic module that R2 has upgraded the software version, and each traffic module collects its own backup data (also known as partial backup data). After all of the traffic modules have finished the collection, the ISSU module 1 integrates individual pieces of partial backup data into backup data 1 (also known as whole backup data).

The above backup data collected by each traffic module is specifically the necessary backup data to maintain a traffic function by itself, such as a forwarding table, routing table and so on included in a protocol module; and user authentication data and so on included in an authentication module.

The ISSU module 1 sends the configuration files and the backup data 1 to the ISSU module 2 through the ISSU backup channel. After the ISSU module 2 receives the configuration files and the backup data 1, the ISSU module 2 restores a local configuration according to the configuration files. The local configuration includes a global configuration (an underlying software and hardware resource allocation, an interface configuration, a communication protocol, etc.) and a traffic configuration (an attribute of a traffic module, a traffic functions, etc.).

Each traffic module included in R2 is started in a role of an ISSU slave node and a distributed master device. The ISSU module 2 sends the configuration files to each traffic module, and each traffic module restores the configuration through the configuration files. Then, the ISSU module 2 sends a notification message to a corresponding traffic module according to the backup data 1, where the notification message includes the backup data required by the traffic module.

After receiving the notification message, each traffic module obtains backup data from the notification message, and restores the traffic data 1 by using the backup data.

It should be noted that, because the configuration files are all in the command-line format, during configuration restoring, configuration can be restored independently for each function without considering the configuring time sequence between functions. Because the backup data 1 is the necessary data of individual traffic modules, traffic modules in R2 are enabled to quickly restore the traffic functions and the transmission bandwidth is saved during the transmission process.

The ISSU module 2 sends an interface registration message to the second network device through the ISSU backup channel in response to determining that the local configuration and traffic data 1 are restored, where the interface registration message includes an interface attributes of each interface included in R2; the ISSU module 2 sets each interface included in R2 to an enabled (UP) state, to cause each interface to receive or send a packet.

R2 including an interface 1 is taken as an example for description. The interface 1 has been registered with R1 according to the above procedure. R2 establishes a connection with R3 through the interface 1.

R2 firstly determines its ISSU identity in response to determining that a packet 1 sent by R3 is received through the interface 1. The interface 1 transmits the packet 1 to a pass through module 2 included in R2 in response to determining that ISSU identity is an ISSU slave node. The pass through module 2 sends the packet 1 to R1 through the ISSU backup channel. After receiving the packet 1, R1 processes the packet 1 accordingly. After ending of the processing, a packet 2 is transmitted to a pass through module 1 included in R1. The pass through module 1 sends the packet 2 to R2 through the ISSU backup channel; R1 transmits the packet 2 to the interface 1, and sends the packet 2 to R3 through the interface 1.

In this way, after the interface of R2 is UP, the traffic flow can be jointly carried and served by R1 and R2, and be centrally processed by R1.

After R2 completes software version upgrade and restores the configuration and the traffic data, the ISSU module 1 included in R1 starts software version upgrade. Before the ISSU module 1 starts software version upgrade, the ISSU module 1 sends an event notification again to each traffic module included in R1 to inform the traffic module to collect backup data of the traffic module itself (also known as partial backup data). After all of the traffic modules have finished the collection, the ISSU module 1 integrates individual pieces of partial backup data into backup data 2 (also known as whole backup data).

The ISSU module 1 sends the backup data 2 to the ISSU module 2 through the ISSU backup channel. The ISSU module 2 sends a notification message again to a corresponding traffic module according to the backup data 2, where the notification message includes the backup data required by the traffic module. After receiving the notification message, each traffic module obtains the backup data from the notification message and stores the backup data.

The ISSU module 1 starts the software version upgrade and triggers R1 to restart. After R1 restarts with the new software version, R1 establishes a communication connection with R2 again. It should be understand that after R1 restarts, modules included in R1 are started in sequence, and the starting process is the same as that after R2 restarts, which will not be repeated here.

After the stacking module 1 is started, the stacking module 1 interactively negotiates with the stacking module 2 again. In this interactive negotiation process, R1 and R2 have the same software version, and R1 and R2 form a stacking system again. In this case, R1 is a slave device in the stacking system, and R2 is a master device in the stacking system. A distributed system is formed between the master and slave devices again. A distributed channel (e.g., a HA channel, an inter-board channel (IBC), unicast and multicast channels, etc.) is established between R1 and R2.

R2 sends backup data 3 to R1 through the distributed channel, to cause R2 to store the backup data 3 locally. The process of collecting and sending the backup data 3 by R2 and storing the backup data 3 by R2 is the same as the aforementioned process of collecting and sending the backup data 1 and 2 by R1 and storing the backup data 1 and 2 by R1, which will not be repeated here.

Based on the same invention idea, an example of the present disclosure further provides a communication apparatus corresponding to the communication method. Referring to Fig. 3, Fig. 3 is the communication apparatus provided in the example of the present disclosure, which is applied to a first network device, wherein the first network device is in a stacking system and is a slave device in the stacking system, the stacking system further includes a second network device which is a master device in the stacking system, a distributed system is formed between the first network device and the second network device, the first network device performs a software version upgrade and restarts, and the apparatus includes:
a forming unit 310, to form no stacking system between the first network device and the second network device in response to determining that a first software version of the first network device after the software version upgrade is different from a second software version of the second network device and the first network device is in an ISSU period,;
an obtaining unit 320, to obtain an ISSU role of the first network device;
an establishing unit 330,to establish an ISSU backup channel with the second network device in response to determining that the ISSU role is a slave node;
a receiving unit 340, to receive configuration files and first backup data sent by the second network device through the ISSU backup channel;
a restoring unit 350, to restore a local configuration and first traffic data according to the configuration files and the first backup data;
wherein, the first network device after the software version upgrade and the second network device are respectively in different distributed systems, and are master devices in their respective distributed systems.

Optionally, the apparatus further includes:
a sending unit (not shown in the figure), to send an interface registration message to the second network device through the ISSU backup channel in response to determining that the local configuration and the first traffic data are restored, wherein the interface registration message includes an interface attributes of each interface included in the first network device;
a setting unit (not shown in the figure), to set each interface included in the first network device to an enabled state, to cause each interface to receive or send a packet.

Optionally, the first network device further includes a first interface, and the sending unit (not shown in the figure) is further to send a first packet to the second network device through the ISSU backup channel in response to determining that the first packet sent by a third network device is received through the first interface, to cause the second network device to process the first packet accordingly;
the receiving unit 340 is further to receive a second packet obtained after the second network device processes the first packet accordingly, through the ISSU backup channel;
the sending unit (not shown in the figure) is further to send the second packet to the third network device through the first interface.

Optionally, the receiving unit 340 is further to receive second backup data sent by the second network device through the ISSU backup channel;
the apparatus further includes a storage unit (not shown in the figure), to store the second backup data locally;
wherein, the second backup data is sent before the second network device performs a software version upgrade and restarts.

Optionally, the forming unit 310 is further to negotiate with the second network device after the software version upgrade to form the stacking system;
the establishing unit 330 is further to establish a distributed channel with the second network device after the software version upgrade;
the sending unit (not shown in the figure) is further to send third backup data to the second network device through the distributed channel, to cause the second network device to store the third backup data locally;
wherein, the first network device after the software version upgrade and the second network device after the software version upgrade are in a same distributed system, and the first network device after the software version upgrade is a master device in the distributed system, and the second network device after the software version upgrade is a slave device in the distributed system.

Optionally, backup data sent for each software version after a software version upgrade has a same data structure in response to determining that a software version of the first network device and a software version of the second network device are in a same software version upgrade interval;
backup data sent for each software version after a software version upgrade has a different data structure in response to determining that a software version of the first network device and a software version of the second network device are in different software version upgrade intervals.

Therefore, by applying the communication apparatus provided in the present disclosure, no stacking system is formed between the first network device and the second network device in response to determining that a first software version of the first network device after the software version upgrade is different from a second software version of the second network device and the first network device is in an ISSU period; the first network device obtains an ISSU role of the first network device; an ISSU backup channel is established with the second network device in response to determining that the ISSU role is a slave node; the first network device receives configuration files and first backup data sent by the second network device through the ISSU backup channel; the first network device restores a local configuration and first traffic data according to the configuration files and the first backup data; wherein, the first network device after the software version upgrade and the second network device are respectively in different distributed systems, and are master devices in their respective distributed systems.

In this way, the first network device and the second network device operate in a dual-machine mode during the cross-version operation. Each network device is the master device in a distributed system of the network device itself. After the first network device restarts, the first network device restores configurations of all modules and restores the forwarded traffic data of traffic modules, without considering the configuring time sequence between the traffic modules. The structure of the backup data can be solidified, so that in the software version upgrade interval, the data structure of backup data synchronized between different versions is no longer changed, which reduces the test workload, and solves the issue of incompatibility of processing time sequence and heavy test workload in the existing ISSU upgrade process.

Based on the same invention idea, an example of the present disclosure further provides a network device, as shown in Fig. 4, which includes a processor 410, a transceiver 420 and a machine readable storage medium 430 having a machine executable instruction that can be executed by the processor 410 stored therein, wherein the machine executable instruction causes the processor 410 to execute the communication method provided in the example of the present disclosure. The aforementioned communication apparatus shown in Fig. 3 can be implemented using the hardware structure of the network device shown in Fig. 4.

The above machine readable storage medium 430 may include Random Access Memory (RAM) or Non-Volatile Memory (NVM), such as at least one disk memory. Optionally, the machine readable storage medium 430 may further be at least one storage device located away from the processor 410.

The above Processor 410 may be a general-purpose processor, including a Central Processing Unit (CPU), a Network Processor (NP), etc.; the above Processor 410 may also be a Digital Signal Processor (DSP), Application Specific Integrated Circuit (ASIC), Programmable Gate Array (FPGA) or other programmable logic devices, discrete gates or transistor logic devices, discrete hardware components.

In the example of the present disclosure, by reading the machine executable instruction stored in the machine readable storage medium 430, the processor 410 is caused by the machine executable instruction to carry out the above communication method in the example of the present disclosure by itself or by calling the transceiver 420.

In addition, an example of the present disclosure provides a machine readable storage medium 430, machine readable storage medium 430 stores a machine executable instruction, wherein the machine executable instruction when called and executed by processor 410, cause the processor 410 to carry out the above communication method in the example of the present disclosure by itself or by calling the transceiver 420.

For the implementation process of the function of each unit in the above apparatus, please refer to the implementation process of the corresponding steps in the above method, and will not be repeated here.

For the apparatus example, since it basically corresponds to the method example, the relevant points can be referred in the partial description of the method example. The examples of the apparatus described above is merely schematic, wherein the units described as separated parts may or may not be physically separated, and the parts shown as units may or may not be physical units, that is, may be located in one place or may be distributed over more than one network unit. Some or all of the modules can be selected according to actual needs to achieve the purpose of the present disclosure solution. Those skilled in the field can understand and implement without creative efforts.

For examples of the communication apparatus and machine readable storage medium, since the involved method content is basically similar to the aforementioned method examples, the description is relatively simple, and the relevant points can be referred in the part of the method example.

The above is only a better example of the present disclosure and is not used to limit the present disclosure. Any modification, equivalent replacement, improvement, etc. made within the spirit and principle of the present disclosure shall be included in the scope of protection of the present disclosure.

## Claims

1. A communication method applied to a first network device, wherein the first network device is in a stacking system and is a slave device in the stacking system, the stacking system further comprises a second network device that is a master device in the stacking system, a distributed system is formed between the first network device and the second network device, the first network device performs a software version upgrade and restarts, the method comprising:
forming no stacking system between the first network device and the second network device in response to determining that a first software version of the first network device after the software version upgrade is different from a second software version of the second network device and the first network device is in an In-Service Software Upgrade ISSU period;
obtaining an ISSU role of the first network device;
establishing an ISSU backup channel with the second network device in response to determining that the ISSU role is a slave node;
receiving configuration files and first backup data sent by the second network device through the ISSU backup channel;
restoring a local configuration and first traffic data according to the configuration files and the first backup data;
wherein, the first network device after the software version upgrade and the second network device are respectively in different distributed systems, and are master devices in their respective distributed systems.

2. The method according to claim 1, further comprising:
sending an interface registration message to the second network device through the ISSU backup channel in response to determining that the local configuration and the first traffic data are restored, wherein the interface registration message comprises an interface attribute of each interface comprised in the first network device;
setting each interface comprised in the first network device to an enabled state, to cause the interface to receive or send a packet.

3. The method according to claim 1, wherein, the first network device further comprises a first interface, and the method further comprises:
sending a first packet to the second network device through the ISSU backup channel in response to determining that the first packet sent by a third network device is received through the first interface, to cause the second network device to process the first packet accordingly;
receiving a second packet obtained after the second network device processes the first packet accordingly, through the ISSU backup channel;
sending the second packet to the third network device through the first interface.

4. The method according to claim 1, further comprising:
receiving second backup data sent by the second network device through the ISSU backup channel;
storing the second backup data locally;
wherein, the second backup data is sent before the second network device performs a software version upgrade and restarts.

5. The method according to claim 4, further comprising:
negotiating with the second network device after the software version upgrade to form the stacking system, and establishing a distributed channel with the second network device after the software version upgrade;
sending third backup data to the second network device through the distributed channel, to cause the second network device to store the third backup data locally;
wherein, the first network device after the software version upgrade and the second network device after the software version upgrade are in a same distributed system, and the first network device after the software version upgrade is a master device in the distributed system, and the second network device after the software version upgrade is a slave device in the distributed system.

6. The method according to claim 1, wherein, backup data sent for each software version after a software version upgrade has a same data structure in response to determining that a software version of the first network device and a software version of the second network device are in a same software version upgrade interval;
backup data sent for each software version after a software version upgrade has a different data structure in response to determining that the software version of the first network device and the software version of the second network device are in different software version upgrade intervals.

7. A communication apparatus applied to a first network device, wherein the first network device is in a stacking system and is a slave device in the stacking system, the stacking system further comprises a second network device that is a master device in the stacking system, a distributed system is formed between the first network device and the second network device, the first network device performs a software version upgrade and restarts, the apparatus comprising:
a forming unit, to form no stacking system between the first network device and the second network device in response to determining that a first software version of the first network device after the software version upgrade is different from a second software version of the second network device and the first network device is in an In-Service Software Upgrade ISSU period,;
an obtaining unit, to obtain an ISSU role of the first network device;
an establishing unit, to establish an ISSU backup channel with the second network device in response to determining that the ISSU role is a slave node;
a receiving unit, to receive configuration files and first backup data sent by the second network device through the ISSU backup channel;
a restoring unit, to restore a local configuration and first traffic data according to the configuration files and the first backup data;
wherein, the first network device after the software version upgrade and the second network device are respectively in different distributed systems, and are master devices in their respective distributed systems.

8. The apparatus according to claim 7, further comprising:
a sending unit, to send an interface registration message to the second network device through the ISSU backup channel in response to determining that the local configuration and the first traffic data are restored, wherein the interface registration message comprises an interface attribute of each interface comprised in the first network device;
a setting unit, to set each interface comprised in the first network device to an enabled state, to cause the interface to receive or send a packet.

9. The apparatus according to claim 8, wherein, the first network device further comprises a first interface, and the sending unit is further to send a first packet to the second network device through the ISSU backup channel in response to determining that the first packet sent by a third network device is received through the first interface, to cause the second network device to process the first packet accordingly;
the receiving unit is further to receive a second packet obtained after the second network device processes the first packet accordingly, through the ISSU backup channel;
the sending unit is further to send the second packet to the third network device through the first interface.

10. The apparatus according to claim 8, wherein, the receiving unit is further to receive second backup data sent by the second network device through the ISSU backup channel;
the apparatus further comprises a storage unit, to store the second backup data locally;
wherein, the second backup data is sent before the second network device performs a software version upgrade and restarts.

11. The apparatus according to claim 10, wherein, the forming unit is further to negotiate with the second network device after the software version upgrade to form the stacking system;
the establishing unit is further to establish a distributed channel with the second network device after the software version upgrade;
the sending unit is further to send third backup data to the second network device through the distributed channel, to cause the second network device to store the third backup data locally;
wherein, the first network device after the software version upgrade and the second network device after the software version upgrade are in a same distributed system, and the first network device after the software version upgrade is a master device in the distributed system, and the second network device after the software version upgrade is a slave device in the distributed system.

12. The apparatus according to claim 7, wherein, backup data sent for each software version after a software version upgrade has a same data structure in response to determining that a software version of the first network device and a software version of the second network device are in a same software version upgrade interval;
backup data sent for each software version after a software version upgrade has a different data structure in response to determining that the software version of the first network device and the software version of the second network device are in different software version upgrade intervals.
